Europäisches Patentamt

European Patent Office

Office européen des brevets

(19)

(11) Publication number: **0 032 722 B1**

(12) **EUROPEAN PATENT SPECIFICATION**

(45) Date of publication of patent specification: **05.06.91**  (51) Int. Cl.⁵ **G02B 6/32**

(21) Application number: **81100254.2**

(22) Date of filing: **15.01.81**

(54) **Optical fiber connectors.**

(30) Priority: **17.01.80 US 112991**

(43) Date of publication of application:
**29.07.81 Bulletin  81/30**

(45) Publication of the grant of the patent:
**05.06.91 Bulletin  91/23**

(84) Designated Contracting States:
**BE DE FR GB IT**

(56) References cited:
**DE-A- 2 722 367**     **FR-A- 2 334 969**
**FR-A- 2 340 558**     **FR-A- 2 349 150**
**JP-A- 55 403**        **US-A- 3 649 098**

**IBM TECHNICAL DISCLOSURE BULLETIN, vol.
22, no. 12, May 1980, New York, US, W.B.
ARCHEY et al.: "Low loss optical coupler",
pages 5288-5290**

(73) Proprietor: GTE Laboratories Incorporated
100 W. 10th Street
Wilmington Delaware(US)

(72) Inventor: Carlsen, John W.
2 Hawthorne Place Apt. 14J
Boston Mass. 02114(US)

(74) Representative: Patentanwälte Grünecker,
Kinkeldey, Stockmair & Partner
Maximilianstrasse 58
W-8000 München 22(DE)

EP 0 032 722 B1

## Description

The invention concerns an optical fiber connector body according to the preamble part of claim 1.

Such an optical fiber connector body is already known from the French patent 23 40 558 to Chown or from the French patent 23 34 969 to Cosneau. This optical fiber body is made of a transparent plastic material. A recessed shoulder of said Cosneau connector body, serving assembly purposes, is provided with a protruding convex lens thereon. On the focal length of said lens, there is a parallel surface to the recessed shoulder, forming a stroke for an optical fiber, which may be inserted through a tapered hole within said body in the direction of an optical axis of the lens.

For the reason that the lens is formed as an integral structure together with a body, such an optical fiber connector body has the advantage that even a small optical fiber may be brought easily in its adjusted position with respect to the focal point of the lens.

However, to connect such optical bodies together is disadvantageous, especially when a quick and easy installation is required. When two such bodies have to be interconnected with each other, a separate element, namely a spacer ring, is needed to keep the opposed lens surfaces at a certain distance with respect to each other. Such an additional spacer ring enhances the manufacturing. Moreover, such a ring may be lost or may not be at hand when a connection should be provided quickly.

Another disadvantage of this prior art connector body lies in the fact that the lens surface is the most protruding surface so that, during the handling of the connector body there is always the possibility that said surfaces are somewhat damaged or scratched which would strongly affect the imaging properties of the connector as a whole so that a considerable transmission loss may occur after a short period of use, especially when the connector is used under rough conditions as, for example, in the field for military purposes.

In summary, the patent to Cosneau discloses a lens 33 and guide piece 34 of one piece of material, with a shoulder 35 serving assembly purposes. The French patent to Cosneau does not suggest a recessed lens surface, and does not suggest a lens having a curved surface recessed inward from a reference surface.

U.S. Patent No. 3,649,098 to Suverison is directed to a lens structure of a fiber optic assembly which is adapted to be detachably connected to an apertured panel. It indicates when a remote light bulb is burned out via a fiber optic bundle that includes a plurality of plastic or glass fibers. The end of a fiber optic bundle is displaced from the rearward surface of the lens a predetermined distance or proper focal length therefrom, so as to provide for maximum concentration of light through the lens.

Suverison is not directed to an optical fiber connector body, but to an optical terminating means, or display device. Suverison is not concerned with connecting one optical fiber to another, he is concerned with a fiber optical bundle including a plurality of fibers. Suverison's disadvantages include: (1) light from end of fiber optic bundle 42 diverges prior to contact with surface 19a and, in part, bounces from walls of recess 41, so that light enters surface 19a from a plurality of different points; and (2) extreme mechanical tolerances are required to provide "predetermined distance of proper focal length from the rearward surface".

West Germany Patent No. DE-A-2 722 367 to Stern et al. discloses an optical fiber connector. The end of a fiber is inserted into a recess in a lens element. The recess is arranged so that light leaving the end of the fiber is given off as a parallel beam by the lens element. The lens element is housed within a separate tube and sleeve.

The West Germany patent to Stern et al. fails to suggest a reference face forward of the lens. No suggestion is made of a lens having a curved surface recessed inwardly from a reference surface.

France Patent No. FR-A-2 340 558 to Chown, in Fig. 3 thereof, shows two terminal devices assembled to form a connector. The two terminal devices are separated by a spacer ring and mounted in a ferrule which fits into a surface molded in each device so as to hold them in the same axis.

In Chown, a slight lateral tolerance between the terminal devices is allowable owing to the dispersion of the beam due to spherical lenses. The reference does not suggest a lens recessed from a reference surface. Chown requires a spacer ring and ferrule, presenting alignment considerations.

It is, therefore, the task of the present invention to provide an optical fiber connector body as mentioned above which allows an easy and quick connection of optical fibers and which is especially suited for connecting fibers under rough conditions and which is not affected disadvantageously with respect to its optical transmission properties under such conditions.

According to the invention, this task is solved by an optical fiber connector body of the type above which is characterized by the characterizing part of claim 1.

According to this inventive solution, no single spacer ring is furthermore needed because said protruding part, forming at its front edge the reference surface, is a piece integrally molded together with the fiber body. Therefore, no additional piece is needed so that the manufacturing of the inventive optical fiber connector body is easy as well as the installation of a connection line. Furthermore, due to the fact that the lens is always recessed inward from said reference surface, even in the case that no connection is installed, the lens is protected against damaging or scratching because the reference surface protrudes over a greater distance compared with the lens surface. So, even under rough conditions, the lens will not be scratched or damaged. For the reason that no separate part is needed between two connector bodies, no multiple alignment is necessary so that tolerance problems are avoided.

The connector body, when it is used as a fiber to fiber connector provides connections of extremely low insertion loss, even with small diameter glass communications/great fibers. It is further largely insensitive to minor scratches and dirt on ends and is tolerant to lateral displacement alignment errors. It is further insensitive to axial separation of connector halves up to several centimeters and can optimally interconnect fibers with different diameters and/or numerical apertures and can be quickly and easily field installed with only a fiber cleaver and epoxy.

Advantageous embodiments of the invention are disclosed in the subclaims.

Especially in accordance with certain features of the invention, each connector body can be cylindrically formed with a slightly raised ring formed with a slightly raised ring formed about its circumference near its reference surface. A union member includes a slightly elastic cylindrical tube having a shaped lip on the inside circumference on both ends. When the bodies are engaged, the lips become slightly stretched and ride on the side slopes of the rings, providing a constant elastic restoring force which pulls the connector bodies together so their reference planes are in contact. The connectors can be provided with orifices extending from their smaller cavities to their exterior surfaces, as by providing at least one groove formed in the walls of the cylindrical bodies, extending from the smaller cavities outward.

## Brief Description of the Drawing

Other objects, advantages, and features of this invention, together with its construction and mode of operation, will be made more apparent from the following description, when read in conjunction with the accompanying drawing, in which:

FIG. 1 is a cross-sectional view of one embodiment of the invention, depicting an optical connector including a connector body and fiber holder, together with an optical fiber with jacket;

FIG. 2 is an end view, taken along the line 2-2 of FIG. 1, depicting the connector body as seen from the fiber end (fiber holder, fiber, and jacket, not shown);

FIG. 3 is a cross-sectional view of a connector body in accordance with another embodiment of the invention; and

FIG. 4 is a cross-sectional view of a pair of optical connectors (together with fiber holder, and optical fiber with jackets) and a snap-together union section, in accordance with yet another embodiment of the invention.

## Description of Preferred Embodiments

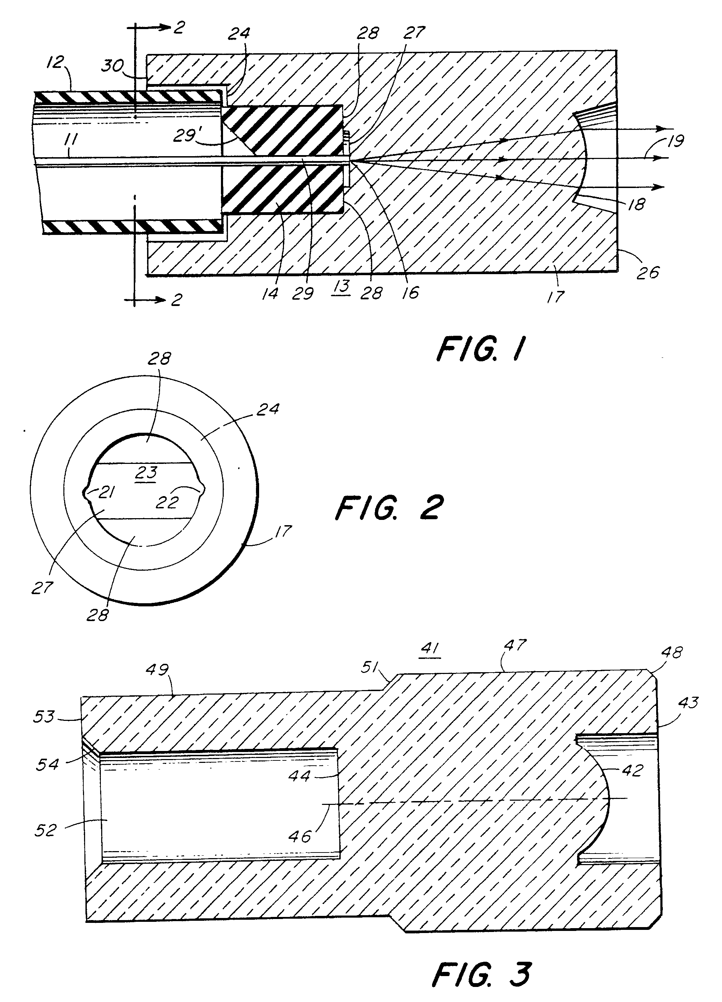

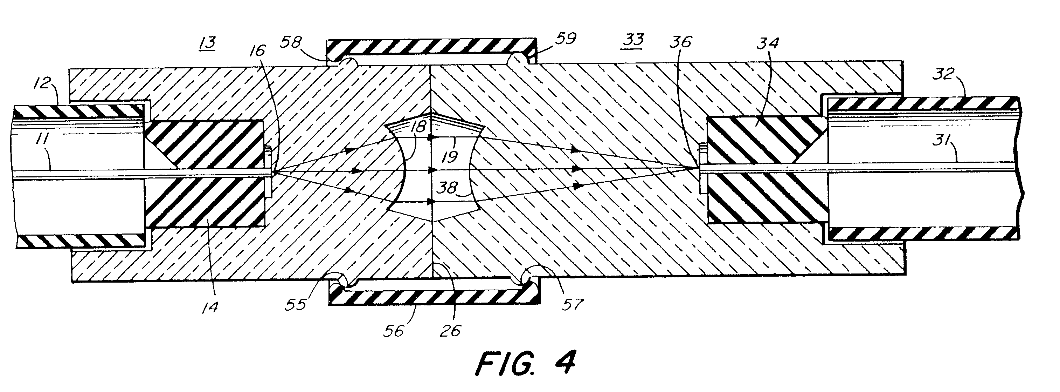

As depicted in FIGS. 1 and 4, an optical fiber 11, 31 includes a protective outer jacket 12, 32

The connector 13, as shown in FIG. 1, includes two molded parts: an elastomer splicer-like fiber holder 14 which receives a field-inserted fiber 11 and automatically aligns it precisely to a specific point 16 within the connector 13, and an optical plastic connector body part 17 with a lens surface 18 molded into it exactly one focal length from the fiber end 16. Light exiting from the fiber end 16 (which has been index-matched with optical epoxy or other transparent material, not shown, to the plastic body part 17) propagates through the optical plastic with a diverging wavefront until it encounters the curved plastic-to-air interface which constitutes the molded lens surface 18. This lens, which preferably is anti-reflection coated to minimize losses, collimates the light into a parallel beam 19 approximately 1 to 5 mm diameter, traveling away in air without diverging significantly -- much like a conventional laser beam FIG 1 illustrates a single fiber-terminating connector 13, but does not show means for coupling it to another such connector (which is discussed later). As shown, the connector 13 is made of two molded parts 14, 17. The connector body 17 is molded of a rigid optical quality transparent plastic, the self-aligning fiber holder 14 is molded of a semi-rigid plastic or elastomeric material. The fiber holder 14 is similar in principle though with important differences, to the elastomeric splices described in copending U. S. patent application, serial No. 023,862 and international application PCT US80 00373 respectively, and can be made according to techniques described in either application.

Although the connector 13, including the fiber holder 14 and connector body 17, is substantially cylindrically symmetric around a common central axis, as shown in the cross-sectional view of FIG. 1, an exception is made for air epoxy relief slots 21, 22 in the wall of an otherwise cylindrical cavity 23 recessed within the connector body from a surface 24. The cylindrically symmetric configuration is not essential to this invention: other shapes can be used as long as the fiber, the lens axis, and the alignment surface have the proper relationship to one another as described hereinafter.

The connector body 17 is a precision molded part of optical quality plastic. It can be made by any of a variety of precision plastic optics technologies, including casting with Emerson & Cuming Stycase 1269A Crystal Clear Epoxy casting resin. However, for low-cost mass production, injection molding with acrylic materials such as Rohm & Hass V811 Plexiglas is believed desirable for achieving extremely high quality optical surfaces and stable, precise dimensions. The precision machining involved is in making the original mold, not in each individual connector.

The connector body 17 has an outer cylindrical shape. A single-surface lens 18 is formed on one end and slightly recessed from an annular reference surface 26. For lowest reflection losses, the lens 18 is anti-reflection coated. The optical axis of the lens 18 is positioned desirably along the axis of the connector, and the reference surface 26 is constructed very precisely perpendicular to the optical axis so that the mating of the reference surfaces 26 of two connectors 13 is the means for aligning their optical axes angularly relative to one another.

At the other end of the cylindrical connector body 17, other surfaces are molded. A surface 27 is parallel to the reference surface 26, and is located at the focal plane of the lens 18, as shown. Surfaces 28, 28 are parallel to the surface 27 and are located a small distance further from the lens 18.

The elastomer fiber holder part 14 is inserted into the close-fitting cylindrical hole 23 which is centered on the optical axis. A preferred technique is to make the hole 23 in the connector body 17 slightly smaller (a few mils) than the outside dimension of the fiber holder 14. Since the fiber holder 14 is elastic, it fits into the hole 23, and symmetric restoring forces center it on axis. The fiber holder 14 is pushed in until it contacts the surfaces 28, 28, leaving a small space between it and the focal plane 27. When the tolerances of the connector body 17 and the fiber holder 14 are sufficient, and the fiber holder 14 is properly inserted into the mating hole 23 in the back of the connector body 17, the axial hole 29 through the center of the fiber holder 14 (which is a fraction of a mil smaller than the diameter of the fiber 11 to be inserted) is accurately in line with the optical axis of the lens 18.

This connector 17 can easily be field-installed by the user as follows: The fiber 11 is cleaved or otherwise prepared to have a smooth, flat surface, perpendicular to the fiber axis. The better the cleave quality, the lower the insertion loss of the resulting connections. When the fiber 11 is coated, the coating is removed, leaving a bare fiber slightly longer than the length of the hole 29 in the fiber holder 14. As an example, FIG. 1 illustrates a protective jacket 12 for a fiber 11 secured along the section of the connector 13 between surfaces 24 and 30. When present, the jacket or cabling material 12 is cut back to the length required; in the case illustrated in FIG. 1, the jacket 12 is cut back to expose a length of fiber 11 a little longer than the distance between surfaces 24 and 27.

Next, a drop of index-matching material, such as epoxy resin (having an index of refraction, when cured, close to that of the fiber 11 and the plastic connector body 17) is placed in the tapered entrance hole 29 of the fiber holder 14. The resin is drawn into the hole 29 by capillary action, and continues to flow into the gap between the surfaces 27 and 28. Air displaced by the resin escapes through the air/epoxy relief slots, consisting of a gap between the surfaces 27, 28, and the grooves 21, 22 molded along the wall between the surfaces 24 and 28, as shown. Depending on the viscosity of the epoxy resin, the size of the relief slots, and other properties of the resin, the elastomer fiber holder 14, and the plastic body 17, the epoxy may continue to be pulled by capillary action all the way to fill the relief slots. The cleaved fiber 11 is then inserted into the hole 29 in the fiber holder 14, and pushed inward until it contacts the plastic focal plane 27 at the focal point 16 on the lens 18 axis. This operation requires no tools, or microscope, since the hole 29 is tapered out to an entrance size 29' easily "threaded" with the fiber 11 by eye, and the contacting of the fiber 11 with the plastic wall is easily felt by the fingers holding the fiber 11. Because the insertion of the fiber 11 has stretched the hole 29 diameter in the fiber holder 14, elastic restoring forces automatically align the fiber 11 with the original hole axis, which is also the optical axis by design. The stretched elastomer holds the fiber 11 in place when the installer releases the fiber 11, and during the curing time for the epoxy, as long as the fiber 11 is not under significant tension. Additional epoxy can be placed on the end of the jacket 12, which is inserted into the opening between surfaces 24 and 30. The epoxy is then allowed to cure. This completes the installation of the connector 13 onto the fiber 11 and jacket 12. The connector to be mated to it is installed in the same fashion.

FIG. 3 is a cross-sectional view of a preferred connector body 41, similar in certain respects to the connector body 17 of FIGS. 1 and 2.

The connector body 41 is constructed of optical plastic with a convex lens surface 42 slightly recessed inward from an annular reference surface 43. The lens surface 42 is molded one focal length from a second reference surface 44 against which the end of an optical fiber (not shown) abuts. The connector body 41 is symmetrical about its central axis 46 having a large cylindrical section 47 near its reference surface 43 (with a small chamfer 48 where they meet to maintain integrity of the body 41) and a slightly smaller cylindrical section 49 posterior to the reference surface 43. A chamfer 51 joins the sections 47 and 49. The foregoing shape of the connector body 41 is highly desirable since two such bodies can be joined by an elastic union member (not shown) comprising a slightly elastic cylindrical tube (for receiving the sections 47) having shaped lips on the inside circumference on both ends so that, when two such bodies 41 are engaged, the union member stretches and rides on the chamfers 51, thus providing a constant restoring force which pulls the connector bodies together so their reference surfaces 43 are in contact.

The reference surface 44 is at the base of a cylindrical cavity 52 having a common axis 46. The cavity 52 is recessed from a plane surface 53 which is perpendicular to the axis 46. The cavity 52 is tapered outward at 54 to the surface 53. The taper 54 can act as a stop for a fiber holder, not shown.

In accordance with a specific configuration of the connector body 41, the length from surface 43 to surface 53 is 9,1mm (0.36 inch). The radius of the section 47 is 2,0mm (0.078 inch). The radius of the section 49 is 1,8mm (0.070 inch). The radius of the cavity 52 is 0,9mm (0.036 inch), concentric to the optical axis to within 0,0005mm (0.00002 inch). The lens surface 42 is recessed inward from the reference surface 43 by 1mm (0.04 inch.) The nominal value of the focal length 3,683mm (0.1450 inch), used in calculating the lens shape for $n = 1.4845$, may be varied experimentally to compensate for uncertainty of n at an operating wavelength of 840 nm. The reference surface 43 is perpendicular to the optical axis 46 to within 73 $\mu$radian (15 seconds of an arc). The chamfer 48 is displaced inward, axially and radially, by 0,127mm (0.005 inch). The radius of the lens surface 42 is 0,89mm (0.035 inch), the radius of its associated aperture being 1,02mm (0.040 inch). The chamfer 51 is 0,254mm (0.010 inch) in axial length, starting 4,06mm (0.16 inch) from the surface 43. The chamfer 54 is displaced, radially and axially, by 0,254mm (0.010 inch.)

FIG. 1 does not show specific means for holding two connectors 13 together, because such means can vary among a wide variety of potential applications in fiber optical systems. The only requirements for such means are (a) that the reference surface 26 of the two connectors 13 be held in intimate contact to maintain the required critical angular tolerances, and (b) that the optical axes of the two connectors 13 be held approximately in line, with a lateral displacement tolerance of several fiber diameters in general.

FIG. 4 illustrates, inter alia, a representative means for holding two connectors 13, 33 together in proper alignment. It includes a simple snap-together means of one molded part 56. The connectors 13, 33 in FIG. 4 are only slightly different from the one in FIG. 1, in that they have a slightly raised ring 55, 57 around their circumference near the lens 18, 38 ends. The additional "union" piece 56 is a slightly elastic cylindrical tube with a shaped lip 58, 59 on the inside circumference on both ends. This part 56 can be made in a variety of ways, including molding. Its dimensions are such that it slips easily over the connector 13 past the reference surface 26, expands a little to get its end lip 58 over the raised ring 55 on the connector 13, and contacts again as it is pushed past the ring 55. The second connector 33 is then similarly slipped into the other end of the union 56 and is pushed until its raised ring 57 is past the lip 59 of the union 56. When both connectors 13, 33 are fully so engaged in the union 56, the union lips 58, 59 become slightly stretched and ride on the side slope of the connector rings 55, 57, as shown in FIG. 4, thus providing a constant elastic restoring force which pulls the connectors 13, 33 together so that their reference surfaces 26 are in contact. To separate them, either or both connectors 13, 33 can be pulled out of the union 56 with a small tug. The details and design considerations of such connection means are well known in the field of plastic molded snap-together electrical connectors. When desired, the union 56 can be constructed as a permanent part of one connector, for male-female style connection.

Referring to FIG. 4, when a connector 33 is placed in the path of the beam 19, facing the connector 13 and properly aligned angularly therewith, the lens 38 of the second connector 33 focuses the light beam down through the plastic body onto the face 36 of the second fiber 31, thus completing the connection between the two fibers 11, 31. Because the exit pupil of the first connector 13, and the entrance pupil of the second connector 33, are each located at infinity, the rays respectively exiting or entering them being essentially parallel to their optical axes, the connectors can be termed "telecentric optical fiber connectors". An imaging system consisting of two telecentric optical systems back-to-back, such as the two joined telecentric connectors 13, 33, enjoys several significantly advantageous characteristics from the point of view of optical fiber connection:

    a. Light rays guided within an optical fiber are constrained to travel within a very small diameter region around the fiber axis, but they have a significant angular range. When they leave the end of the fiber, they diverge rapidly both because of this initial angular spread and because of diffraction spreading from a small diameter concentration of energy. The telecentric connector essentially converts the initial small-diameter guided light distribution into a much larger diameter free-space unguided beam traveling in the same direction. When the unguided beam has been magnified M times the guided beam diameter, the angular spread of the rays due to both geometrical and diffraction spreading are believed to be reduced by this same factor, M. This permits a much greater separation between the ends of the two telecentric connectors (about $M^2$ times greater) than was possible between the two fiber ends themselves. In practice, the permissible separation has been found in general to be several centimeters.

b. Permissible lateral displacement tolerances (perpendicular to the optical axis) are also believed to be multiplied by M.

c. These looser tolerances on linear displacement misalignment are achieved at the expense of tighter angular tolerances, again by a factor of M. However, the precise angular alignment required is very easily achieved in the embodiments described.

FIG. 4 illustrates how different focal-length telecentric connectors can be made for different diameter or numerical aperture fibers, so that they can be connected for optimal light energy throughput. When the lenses in the two connectors 13, 33 have different focal lengths, and the fiber ends are located at the respective focal points 16, 36 of each, then as light passes from the first to the second, an image of the first fiber end is still imaged on the end of the second fiber -- but with a change of size and angular spread. The image becomes magnified in direct proportion to the ratio of the focal lengths, while the angular range of the light rays are reduced by the same ratio (thus, the input numerical aperture to the second fiber becomes reduced). Standard optical design optimization techniques can thus be utilized to optimally match two different types of fibers according to requirements of specific applications. Other modifications can be performed to achieve a desirable distribution of modes launched within the second fiber. The variables readily available to an optical designer are: (1) the focal lengths, (2) the position of the fiber ends relative to their respective focal points, (3) the shapes of the respective lenses, and (4) for fine tuning, the distance between the lenses (an adjustable union can be used, when desired).

The telecentric optical fiber connector in accordance with this invention has been designed specifically to meet the needs of optical communications systems using premium-quality, extremely low loss fibers, such as Corning Corguide brand fibers. In such systems, insertion losses greater than a few tenths of a dB are significant drains on the system power level. However, the core diameters of such fibers are so small, 63 micrometers for example, that alignment tolerances have been impossible to achieve in economical and field-installable connector designs of known prior art connectors.

A major difference, other than lower cost and less complexity, between the present design and the three other optical imaging designs, discussed earlier, using conventional lenses, spheres, and gradient-index lenses, is the elastomeric self-aligning fiber holder 14. Using this, a user can quickly and easily install the connector 13 to a cleaved fiber end and obtain an almost perfect positioning and angular alignment of the fiber within the connector -- with no adjustments, microscopic inspection, or special tools.

Other modifications may be performed without departing from the spirit and scope of this invention. For example, an aspheric lens surface can be specifically designed to reduce throughput-degrading optical aberrations. The special aspheric lens fabrication techniques, being applied only once to the mold, not to the individual molded parts, would be cost effective. Other types of index-matching materials than epoxy can be used at the fiber-to-plastic junction. For example, the space between surfaces 27 and 28 in FIG. 1 can be filled during construction with an appropriate fluid or optical gel. Then the fiber and jacket or cabling materials can be secured in place by other mechanical means without the use of epoxy.

## Claims

1. An optical fiber connector body (17) with a reference surface (26), with a lens having a convex surface (18) molded into said connector body and with a third surface (27), forming a focal plane of said lens and having a point (16) thereon one focal length from the convex lens surface (18), said third surface (27) being parallel to said reference surface (26), **characterized in that**

    (a) said connector body (17) is integrally molded in one piece of optical quality transparent plastics material

    (b) that said convex lens surface (18) is recessed inward from said reference surface and that

    (c) said reference surface (26) constitutes one end face of the body and is accurately plane and perpendicular to the axis of the lens surface so that, when the reference surface is held against the corresponding surface of a similar body the optical axes of the lens surfaces are automatically aligned with each other.

2. The body according to claim 1, characterized in that said reference surface (26) and said third surface (27) are each planar.

3. The body according to claim 1 or 2, characterized by a substantially cylindrical cavity recessed from a fourth surface, and further by having a smaller cavity further recessed therewithin terminating at said third surface (27), said point lying on a axis of said cylindrical cavity.

4. The body according to claim 3, characterized by having a least one groove (21,22) formed within the wall of said substantially cylindrical cavity, extending from said fourth surface to said smaller cavity (23).

5. The body according to at least one of the claim 1 to 4 characterized in that at least a portion of an outer surface of said body (17) is cylindrical and said reference surface (26) is flat and annular.

6. A fibre optic connector comprising a body according to at least one of the claims 1 to 5, characterized by means (14) for supporting an optical fiber (17) in engagement with said point on said body (17) and that the means (14) for supporting an optical fiber is an integral component.

7. The connector according to claim 6, characterized therein that the means (14) is an elastomeric fiber holder (14), adapted to fit within said substantially cylindrical cavity of said body and frictionally engage with said wall thereof and has an axial hole (29) for supporting an optical fiber (11) therewithin and in engagement with said point on said body (17).

8. The connector according to claim 7, characterized by an index-matching material at an interface of the fiber (11) and said third surface (27).

9. The connector according to any one of the claims 6 to 8, characterized in that the fiber holder is a precision molded elastomeric optical fiber holder (14) for holding an optical fiber (11) of a first diameter, said fiber holder (14) comprising a molded cylindrical piece of elastic material having an axial hole (29) of a second diameter from one end of said piece to another end thereof, said hole being tapered to a third diameter near one only of said ends, wherein said third diameter is greater than each of said first diameter and said second diameter, and wherein prior to insertion of said fiber, said second diameter is smaller than said first diameter.

10. The body according to any one of the foregoing claims, characterized by means (56) for joining said body (13) to another body (33) so that said reference surface (26) of said body engages with the reference surface of said other body (33).

11. The body as claimed in any one of the foregoing claims, characterized in that the body (17) is cylindrically formed with a slightly raised ring (55) formed about its circumference near its reference surface (26).

**Revendications**

1. Corps (1) de connecteur pour fibres optiques ayant une surface de référence (26), une lentille présentant une surface convexe (18) moulée dans le dit corps de connecteur et une troisième surface (27) formant un plan focal de la dite lentille et présentant un point (16) à une longueur focale de la surface convexe (18) de la lentille, la dite troisième surface (27) étant parallèle à la dite surface de référence (26), caractérisé en ce que:

(a) le dit corps de connecteur (17) est intégralement moulé en une seule pièce en un matériau plastique transparent de qualité optique;

(b) la dite surface convexe (18) de la lentille est en retrait à l'intérieur de la dite surface de référence; et

(c) la dite surface de référence (26) constitue une extrémité du corps et est plane avec précision et perpendiculaire à l'axe de la surface de la lentille, de telle manière que, lorsque la surface de référence est disposée contre la surface correspondante d'un corps similaire, les axes optiques des surfaces des lentilles sont automatiquement alignés.

2. Corps selon la revendication 1 caractérisé en ce que la dite surface de référence (26) et la dite troisième surface (27) sont toutes deux planes.

3. Corps selon la revendication 1 ou 2 caractérisé par une cavité substantiellement cylindrique pratiquée dans une quatrième surface, et, en outre, par le fait d'avoir une cavité plus petite pratiquée dedans et finissant à la dite troisième surface (27), le dit point tombant dans un axe de la dite cavité cylindrique

4. Corps selon la revendication 3 caractérisé par le fait de comporter au moins une rainure (21, 22) pratiquée dans la paroi de la dite cavité substantiellement cylindrique, s'étendant de la dite quatrième surface jusqu'à la dite cavité plus petite (23).

5. Corps selon l'une quelconque des revendications 1 à 4 caractérisé en ce qu'au moins une partie d'une surface extérieure du dit corps (17) est cylindrique et que la dite surface de référence (26) est plane et annulaire.

6. Connecteur pour fibres optiques comprenant un corps selon au moins une des revendications 1 à 5 caractérisé par un moyen (14) de support d'une fibre optique (17) en contact avec le dit point sur le dit corps (17) et que le moyen (14) de support d'une fibre optique est un composant monolithe.

7. Connecteur selon la revendication 6 caractérisé en ce que le moyen (14) est un support de fibre en élastomère adapté pour être disposé à l'intérieur de la dite cavité substantiellement cylindrique et en contact de friction avec la dite paroi et présente une ouverture axiale (29) dans laquelle est disposée une fibre optique (11) et en contact avec le dit point sur le dit corps (17).

8. Connecteur selon la revendication 7 caractérisé par un matériau d'appariation d' indexes à l'interface de la fibre (11) et de la dite troisième surface (27).

9. Connecteur selon l'une quelconque des revendications 6 à 8 caractérisé en ce que le support de fibre (14) est un support de fibre optique en élastomère moulé avec précision pour porter une fibre optique (11) d'un premier diamètre, le dit support de fibre (14) comprenant une pièce cylindrique moulée dans un matériau élastique présentant un orifice axial (29) d'un deuxième diamètre entre une extrémité de la dite pièce et une autre extrémité de celle-ci, le dit orifice étant côné entre un troisième diamètre proche de l'une seulement des dites extrémités, dans lequel le dit troisième diamètre est supérieur à chacun des dits premier et deuxième diamètres, et dans lequel, avant insertion de la dite fibre, le dit deuxième diamètre est plus petit que le dit premier diamètre.

10. Corps selon l'une quelconque des revendications précédentes caractérisé par un moyen (56) de jonction du dit corps (13) à un autre corps (33), de telle manière que la dite surface de référence (26) du dit corps soit en contact avec la surface de référence du dit autre corps (33).

11. Corps selon l'une quelconque des revendications précédentes caractérisé en ce que le corps (17) affecte une forme cylindrique avec un anneau (55) légèrement relevé ménagé sur sa circonférence à proximité de sa surface de référence (26).

**Ansprüche**

1. Verbinder (17) für optische Fasern mit einer Referenzoberfläche (26), mit einer in dem Verbinder geformten Linse mit konvexer Oberfläche (18) und mit einer dritten Oberfläche (27), die die Brennebene der Linse bildet und auf der sich ein Punkt (16) befindet, der eine Brennweite von der konvexen Linsenoberfläche (18) entfernt ist, wobei die dritte Oberfläche (27) parallel zur Referenzoberfläche (26) ist, **dadurch gekennzeichnet, daß**

a) der Verbinder (17) integriert in einem Stück eines transparenten, optischen Qualitäts-Plastikmaterials geformt ist,

b) daß die konvexe Linsenoberfläche (18) nach innen abgesetzt von der Referenzoberfläche angeordnet ist und daß

c) die Referenzoberfläche (26) ein Ende des Verbinders bildet und exakt plan und senkrecht zur Achse der Linsenoberfläche ist, so daß, falls die Referenzoberfläche gegen eine entsprechende Oberfläche eines ähnlichen Verbinders gehalten ist, die optischen Achsen der Linsenoberflächen automatisch zueinander ausgerichtet sind.

2. Der Verbinder nach Anspruch 1, **dadurch charakterisiert,** daß die Referenzoberfläche (26) und die dritte Oberfläche (27) eben sind.

3. Der Verbinder nach Anspruch 1 oder 2, **dadurch gekennzeichnet,** daß eine im wesentlichen zylindrische Aushöhlung von einer vierten Oberfläche versenkt ausgebildet ist und eine weitere kleinere Aushöhlung wiederum in dieser versenkt ist, wobei die kleine Aushöhlung in der dritten Oberfläche (27) endet und der Punkt auf einer Achse der zylindrischen Aushöhlung liegt.

4. Der Verbinder nach Anspruch 3, **dadurch gekennzeichnet,** daß wenigstens eine Ausbuchtung (21, 22) innerhalb der Wand der im wesentlichen zylindrischen Aushöhlung gebildet ist, die sich von der vierten Oberfläche zu der kleineren Aushöhlung (23) erstreckt.

5. Der Verbinder nach wenigstens einem der Ansprüche 1 bis 4, **dadurch gekennzeichnet,** daß wenigstens ein Abschnitt einer äußeren Oberfläche des Verbinders (17) zylindrisch ist und die Referenzoberfläche (26) flach und kreisförmig ist.

6. Ein Verbinder für optische Fasern mit einem Verbinderkörper nach wenigstens einem der Ansprüche 1 bis 5, **dadurch gekennzeichnet,** daß eine Einrichtung (14) zur Unterstützung einer optischen Faser (17) in Berührung mit dem Punkt auf den Verbinder (17) angeordnet ist und daß die Einrichtung (14) zur Unterstützung der optischen Faser ein integriert ausgebildeter Bestandteil des Verbinders ist.

7. Ein Verbinder nach Anspruch 6, **dadurch gekennzeichnet,** daß die Einrichtung (14) ein gummiartiger Faserhalter (14) ist, der zur Einpassung in die im wesentlichen zylindrische Aushöhlung des Verbinders ausgebildet ist und mit dessen Wänden kraftschlüssig verbunden ist und eine axiale Öffnung (29) zur Unterstützung der optischen Faser (11) aufweist und in Berührung mit dem Punkt des Verbinderkörpers (17) ist.

8. Der Verbinder nach Anspruch 7, **dadurch gekennzeichnet,** daß ein Material mit entsprechendem Brechungsindex an der Grenzfläche zwischen der Faser (11) und der dritten Oberfläche (27) angeordnet ist.

9. Der Verbinder nach wenigstens einem der Ansprüche 6 bis 8, **dadurch gekennzeichnet,** daß der Faserhalter ein präzise gefertigter, gummiartiger optischer Faserhalter (14) zum Halten einer optischen Faser (11) eines ersten Durchmessers ausgebildet ist, der Faserhalter (14) ein zylindrisch ausgebildetes Teil aus einem elastischen Material mit einer Axialbohrung (29) eines zweiten Durchmessers umfaßt, wobei die axiale Bohrung von einem Ende bis zum anderen Ende des zylindrischen Teils ausgebildet ist, die Bohrung an einem Ende konisch auf einen dritten Durchmesser erweitert ist, wobei der dritte Durchmesser sowohl größer als der erste als auch der zweite Durchmesser ist, und wobei vor dem Einstecken der Faser der zweite Durchmesser kleiner als der erste Durchmesser ist.

10. Der Verbinder nach wenigstens einem der vorangehenden Ansprüche, **dadurch gekennzeichnet,** daß eine Einrichtung (56) zur Verbindung des Verbinderkörpers (13) mit einem anderen Verbinderkörper (33) ausgebildet ist, wobei die Referenzoberfläche (26) des einen Verbinderkörpers mit der Referenzoberfläche des anderen Verbinderkörpers in Verbindung steht.

11. Der Verbinder nach einem der vorangehenden Ansprüche, **dadurch gekennzeichnet,** daß der Verbinderkörper (17) zylindrisch mit einem leicht abstehenden Ring (55) geformt ist, wobei der Ring entlang des Umfangs in der Nähe der Referenzoberfläche (26) angeordnet ist

FIG. 1

FIG. 2

FIG. 3

FIG. 4

EP 0 032 722 B1